# EUROPÄISCHE PATENTSCHRIFT

(11) **EP 2 821 205 B1**
(45) Veröffentlichungstag und Bekanntmachung des Hinweises auf die Patenterteilung: **08.06.2016**
(21) Anmeldenummer: 14001497.8
(22) Anmeldetag: 01.04.2014
(51) Int. Cl.: B29C 57/04, B29D 23/00, B29C 47/00

(54) **Verfahren zur Herstellung von im Durchmesser erweiterten Rohrstücken aus einem Kunststoffrohr und Anordnung zur Durchführung des Verfahrens**
Method for manufacture of pipe elements with an extended diameter from a plastic pipe and assembly for carrying out the method
Procédé de fabrication d'éléments de tuyaux au diamètre élargi d'un tuyau en plastique et agencement destiné à l'exécution du procédé

(30) Priorität: 05.07.2013 DE 102013011266
(43) Veröffentlichungstag der Anmeldung: 07.01.2015
(73) Patentinhaber: isoplus Fernwärmetechnik GmbH, 99706 Sondershausen (DE)
(72) Erfinder: Jens Hagedorn, 99706 Sondershausen (DE); Oliver Wersenger, 99706 Hachelbich (DE); Carsten Hartung, 99713 Helbedünorf (DE)
(74) Vertreter: Hauck Patentanwaltspartnerschaft mbB

(56) Entgegenhaltungen:
- GB-A- 1 148 400
- US-A1- 2007 164 486

## Beschreibung

Die Erfindung betrifft einerseits ein Verfahren zur Herstellung von im Durchmesser erweiterten Rohrstücken aus einem Kunststoffrohr gemäß den Merkmalen im Oberbegriff des Anspruchs 1.

Andererseits richtet sich die Erfindung auf eine Anordnung zur Durchführung des Verfahrens entsprechend den Merkmalen im Oberbegriff des Anspruchs 2.

Rohrstücke der in Rede stehenden Art werden zum Beispiel als Muffen genutzt, die zur Überbrückung der Verbindungsnähte von mit einem Kunststoffmantel versehenen Pipelinerohren dienen. Zu diesem Zweck wird die Kunststoffummantelung endseitig der Pipelinerohre über eine bestimmte Länge abisoliert und dann werden die Pipelinerohre verschweißt. Die Muffen, welche vorab auf die Kunststoffummantelung aufgeschoben worden sind, werden danach über den Verbindungsbereich geschoben und schließlich aufgeschrumpft.

Die bisherigen Verfahren zur Herstellung von insbesondere Kunststoffummantelungen in Form von Kunststoffrohren und die zu ihrer Verbindung notwendigen, im Durchmesser größeren Muffen, verlangen separate Arbeitsschritte, diverse Vorrichtungen sowie einen erhöhten Personalbedarf (siehe beispielsweise GB1148400).

Der Erfindung liegt - ausgehend vom Stand der Technik - die Aufgabe zugrunde, sowohl ein Verfahren zur Herstellung von im Durchmesser erweiterten Rohrstücken aus einem Kunststoffrohr als auch eine Anordnung zur Durchführung des Verfahrens zu schaffen, bei welchen deutlich weniger Arbeitsschritte, Vorrichtungen sowie ein geringerer Personalbedarf erforderlich sind.
Was die Lösung des verfahrensmäßigen Teils dieser Aufgabe anlangt, so besteht diese in den Merkmalen des Anspruchs 1.
Der Kerngedanke der Erfindung besteht darin, ein aus einem Extruder tretendes Kunststoffrohr in einem kontinuierlichen Arbeitsgang gleichzeitig zur Herstellung von Rohrstücken zu nutzen, die insbesondere als Muffen zur Überbrückung der Verbindungsnähte an mit Kunststoffummantelungen versehenen Pipelinerohren dienen.
Zu diesem Zweck wird zunächst das Kunststoffrohr hinter dem Rohrabzug abgelängt Ein endseitig des Extruders im Kunststoffrohr vorgesehenes Widerlager, auch Corona genannt, wird dann mit einem zum Kunststoffrohr axial ausgerichteten Aufweitdorn abstandsveränderbar gekoppelt. Dies kann zum Beispiel ein flexibles Verbindungsmittel in Form eines Drahtseils sein. Daraufhin wird das Kunststoffrohr mit Extrusionsgeschwindigkeit in Richtung auf den Aufweitdorn verlagert. Bei Kontakt des Kunststoffrohrs mit dem Aufweitdorn wird dieser vom Kunststoffrohr verlagert, wobei der Aufweitdorn bis zu seiner Endlage in eine Erwärmungseinheit für das Kunststoffrohr überführt wird. Die Endlage ist erreicht, wenn das Verbindungsmittel zwischen dem Aufweitdorn und dem Widerlager am Rohrabzug straff gespannt ist. In dieser Endlage befindet sich der Aufweitdorn teils in der Erwärmungseinheit, teils in einer nachgeordneten Kühleinheit. In der Erwärmungseinheit wird das Kunststoffrohr bei gleichbleibender Extrusionsgeschwindigkeit kontinuierlich erwärmt und dann im erwärmten Zustand über den Aufweitdorn geschoben, wobei das Kunststoffrohr im Innen- und Außendurchmesser auf die gewünschten Maße erweitert wird. Dem nunmehr erweiterten Kunststoffrohr wird sodann in der der Erwärmungseinheit nachgeordneten Kühleinheit Hitze entzogen und zwar derart, dass der Innen- und Außendurchmesser mit einem kontrollierten Nachschrumpfen erhalten bleibt. Nach dem Austritt aus der Kühleinheit wird das erweiterte Kunststoffrohr auf die gewünschten Rohrstücklängen, bevorzugt zur Schaffung von Muffen, abgeteilt

Der wesentliche Vorteil des erfindungsgemäßen Verfahrens liegt erkennbar darin, dass das Verfahren zur Erzeugung des Kunststoffrohrs auch für die Herstellung der im Innen- und Außendurchmesser erweiterten Rohrstücke, insbesondere Muffen, genutzt werden kann, wobei als manueller Vorgang lediglich die Kopplung des Aufweitdorns mit dem Widerlager am Rohrabzug des Extruders anfällt Ansonsten handelt es sich um eine automatisch ablaufende Vorgehensweise. Es sind insgesamt weniger Arbeitsschritte und Vorrichtungen sowie ein geringerer Personalbedarf erforderlich.

Insbesondere kann jetzt bei der Verbindung von Kunststoffrohren und Muffen, vorzugsweise aus Polyethylen (PE), vorteilhaft der Memory-Effekt von PE ausgenutzt werden.

Hinsichtlich des gegenständlichen Teils der der Erfindung zugrunde liegenden Aufgabe wird die Lösung in den Merkmalen des Anspruchs 2 erblickt.

Vorteilhafte Weiterbildungen der gegenständlichen Lösung sind Bestandteil der Ansprüche 3 bis 15.

Die Anordnung zur Durchführung des Verfahrens besteht demgemäß aus einer dem Rohrabzug des Extruders in Reihe nachgeordneten Bereitstellungseinheit für den über ein flexibles Verbindungsmittel mit dem Widerlager am Rohrabzug koppelbaren Aufweitdorn, aus einer Erwärmungseinheit und einer Kohleinheit für das Kunststoffrohr sowie aus einer Trennvorrichtung zum Abteilen der Rohrstücke vom Kunststoffrohr. Alle dem Rohrabzug nachgeordneten Einrichtungen sind demzufolge bei Bedarf in die Fertigungslinie für das Kunststoffrohr eingliederbar und können nach Herstellung der benötigten Anzahl an Rohrstücken auch wieder aus der Fertigungslinie entfernt werden.

Die Bereitstellungseinheit für den Aufweitdorn besteht vorteilhafterweise aus einem ortsveränderbaren tischartigen Gestell mit einer oberseitigen Rollenbahn mit diaboloförmig gestalteten Tragrollen für den Aufweitdorn. Das Gestell kann aufgrund seiner Ortsveränderbarkeit exakt auf die Mittellängsachse des Kunststoffrohrs abgestellt werden, wobei die speziell geformten Tragrollen eine sichere Lagerung des Aufweitdorns gewährleisten, um diesen über das flexible, jedoch nicht längenveränderbare Verbindungsmittel mit dem Widerlager endseitig des Rohrabzugs zu koppeln.

Die der Bereitstellungseinheit nachgeordnete Erwärmungseinheit für das Kunststoffrohr weist mindestens ein mit einer Eintrittsöffnung und einer dazu koaxial ausgerichteten Austrittsöffnung versehenes Gehäuse auf, in welchem im axialen Abstand zueinander kreisringförmig verlegte infrarotstrahler vorgesehen sind. Mit Hilfe dieser Infrarotstrahler kann das Kunststoffrohr auf diejenige Temperatur gebracht werden, welche ausreicht, um das Kunststoffrohr über den Aufweitdorn schieben und es dabei im Innen- und Außendurchmesser erweitern zu können. Die Erwärmungstemperatur kann je nach dem eingesetzten Rohrmaterial zwischen 110°C und 120°C betragen.

Die Herstellung eines derart ausgebildeten Gehäuses sowie seine Montage und Funktion werden dadurch merklich verbessert, wenn das Gehäuse im mittleren Höhenbereich in einer horizontalen Ebene geteilt ist und in jedem Gehäuseteil sich über einen Halbkreis erstreckende Infrarotstrahler vorgesehen sind, wobei die Infrarotstrahler im oberen Gehäuseteil zu den Infrarotstrahlern im unteren Gehäuseteil auf Lücke versetzt angeordnet sind. Die infrarotstrahler sind an ihren radial nach außen gerichteten Umfangsbereichen beschichtet, Insbesondere mit Gold. Dadurch soll die Strahlungswärme nicht nach außen durchschlagen, sondern gezielt dem zu erwärmenden Kunststoffrohr zugeführt werden.

Auch ist es in diesem Zusammenhang zweckmäßig, wenn dem oberen Gehäuseteil ein Gebläse zugeordnet ist. Hierdurch werden die Gehäuseteile gekühlt und ferner verhindert, dass die rückseitige Beschichtung an den Infrarotstrahlern beschädigt wird.

Die Führung des Kunststoffrohrs durch das Gehäuse wird dadurch sichergestellt, dass sowohl an der Eintrittsöffnung als auch an der Austrittsöffnung des Gehäuses je ein einstellbares Rollenlager mit diaboloförmig gestalteten Tragrollen angeordnet ist. Die Lage der Tragrollen kann sowohl in der Höhe als auch in Querrichtung stufenlos eingestellt werden.

Wie schon bei der Bereitstellungseinheit für den Aufweitdorn ist es auch im Hinblick auf das Gehäuse als Bestandteil der Erwärmungseinheit sinnvoll, wenn dieses auf einem ortsveränderbaren tischartigen Gestell angeordnet ist. Somit kann das Gestell bei Bedarf in die Fertigungslinie für das Kunststoffrohr eingefügt werden.

Sowohl hinsichtlich der Vereinfachung der Herstellung als auch, was die Wirksamkeit der Erwärmungseinheit anlangt, ist es zweckmäßig, dass mindestens zwei Gehäuse in Reihe vorgesehen sind. Eine besonders effektive Ausführungsform sieht drei in Reihe mit Abstand hintereinander angeordnete Gehäuse vor.

An die Erwärmungseinheit schließt sich in Durchlaufrichtung des Kunststoffrohrs eine Kühleinheit an, in welcher dem im Innen- und Außendurchmesser erweiterten Kunststoffrohr Hitze entzogen wird. Dazu weist die Kühleinheit vorteilhaft eine rohrförmige Kühlstrecke mit radial nach Innen gerichteten, Sprühdüsen auf. Als Kühlmittel kann insbesondere Wasser verwendet werden. Die Sprühdüsen sind so in die Kühlstrecke Integriert, dass über den gesamten Umfang eine gleichmäßige Abschreckung des Kunststoffrohrs erfolgt, um ein kontrolliertes Nachschrumpfen zu gewährleisten.

Auch im Verlauf der Kühlstrecke der Kühleinheit sind für den einwandfreien Transport des Kunststoffrohrs mehrere Rollenlager mit diaboloförmig gestalteten Tragrollen vorgesehen, wobei aufgrund von vorzugsweise einstellbaren Rollenlagern die axiale Ausrichtung des Kunststoffrohrs zur Längsachse des Rohrabzugs des Extruders sichergestellt werden kann.

Auch die Kühleinheit ist wie die Erwärmungseinheit und die Bereitstellungseinheit auf einem ortsveränderbaren tischartigen Gestell angeordnet, das die Eingliederung in die Fertigungslinie für das Kunststoffrohr erleichtert.

Vorzugsweise sind die Gestelle für die Bereitstellungseinheit, die Erwärmungseinheit und die Kühleinheit mit Stützrollen versehen. Die gegebenenfalls um vertikale Achsen drehbaren Stützrollen können lagefixiert werden, wenn die Gestelle exakt hintereinander ausgerichtet sind.

Eine besonders einfache Ausführungsform der Gestelle besteht darin, dass sie aus fachwerkartig zusammengesetzten Profilstäben mit an deren Längsseiten vorgesehenen hinterschnittenen Nuten gebildet sind. Die Profilstäbe sind handelsüblich und brauchen lediglich auf die erforderlichen Längen gebracht und dann gefügt zu werden.

Eine vorteilhafte Bauart des Aufweitdorns sieht vor, dass dieser insgesamt rohrförmige, also hohl ausgebildet ist. Er weist einen im Außendurchmesser auf den Innendurchmesser des aus dem Extruder tretenden Kunststoffrohrs abgestimmten zylindrischen Zentrierabschnitt auf. Dieser in das Kunststoffrohr fassende Zentrierabschnitt stellt die axiale Ausrichtung des Kunststoffrohrs auf den Aufweitdorn sicher. An den Zentrierabschnitt schließt sich ein konischer Aufweitabschnitt an, dem ein zylindrischer Tragabschnitt folgt, der hinsichtlich des Außendurchmessers auf den Innendurchmesser der abzuteilenden Rohrstücke abgestellt Ist. Während der Aufweitabschnitt die Vergrößerung des Innen- und Außendurchmessers des Kunststoffrohrs auf die gewünschten Maße der letztlich abzuteilenden Rohrstücke sicherstellt, dient der Tragabschnitt zur Aufrechterhaltung der Abmaße, wobei in der Endlage des Aufweitdorns der Tragabschnitt teils in der Erwärmungseinheit, teils In der Kühleinheit liegt.

Das Ende des Tragabschnitts nimmt in Richtung auf die dem Extruder abgewandte Stirnseite des Aufweitdorns im Sinne einer Auslaufzone geringfügig ab. Da sich dieser Längenabschnitt des Aufweitdorns bereits in der Abkühlzone des Kunststoffrohrs befindet und hier ein Schrumpfvorgang einsetzt, wird mit der Durchmesserverjüngung ein Einklemmen des Rohrstrangs vermieden.

Eine besonders zweckmäßige Ausführungsform des Aufweitdorns wird darin gesehen, dass der Zentrierabschnitt, der Aufweitabschnitt und der aus zwei lösbar aneinander gefügten Längenbereichen bestehende Tragabschnitt trennbar zusammengesetzt sind, wobei der Zentrierabschnitt und der diesem abgewandte endseitige Längenbereich des Tragabschnitts durch ein den Aufweitdorn axial durchsetzendes Koppelelement miteinander verbunden sind. Die Einzelteile des Aufweitdorns können daher in vorteilhafter Weise getrennt voneinander hergestellt werden. Das Koppelelement dient dann im Zusammenhang mit entsprechend ausgebildeten Zentrierungen zwischen den aufeinanderfolgenden Teilen der sicheren Fügung dieser Einzelteile.

In diesem Zusammenhang ist es von Vorteil, wenn das Koppelelement eine Spindel umfasst, welche an strahlenförmig gestalteten Einsätzen in den Übergangsbereichen einerseits von dem Zentrierabschnitt auf den Aufweitabschnitt und andererseits zwischen den beiden Längenbereichen des Tragabschnitts festlegbar ist. Die Spindel kann gegebenenfalls längenveränderbar ausgebildet sein.

Sinnvoll ist es im Rahmen der Erfindung ferner, dass bevorzugt im Übergangsbereich vom Zentrierabschnitt auf den Aufweitabschnitt eine Ringmutter zum Anschlagen des insbesondere aus einem Drahtseil bestehenden Verbindungsmittels zwischen dem Aufweitdorn und dem Widerlager am Extruder vorgesehen Ist. Die Ringmutter kann dann zusammen mit einer Feststellmutter am Übergangsbereich zwischen den beiden Längenbereichen des Tragabschnitts dazu genutzt werden, um alle Einzelteile des Aufweitdorns einwandfrei gegeneinander zu ziehen.

Denkbar ist ferner, dass die Ringmutter auch an einer anderen Stelle des Aufweitdorns positioniert werden kann.

Darüberhinaus wird es zwecks Gewichtsersparnis als vorteilhaft angesehen, wenn der Zentrierabschnitt und der diesem abgewandte Längenbereich des Tragabschnitts mit auf dem Umfang verteilten Längsausnehmungen versehen sind.

Letztlich ist es noch von Vorteil, dass die Trennvorrichtung für die Rohrstücke aus einer Rohrsäge besteht. Diese kann zum Beispiel als sogenannte fliegende Säge ausgebildet sein, deren Bewegung auf die Extrusionsgeschwindigkeit des Kunststoffrohrs abgestimmt ist

Die Erfindung ist nachfolgend anhand von in den Zeichnungen dargestellten Ausführungsbeispielen näher erläutert. Es zeigen:
- Figur 1: in schematischer Seitenansicht, teilweise im Längsschnitt, eine Anordnung zur Herstellung von Im Durchmesser erweiterten Rohrstücken aus einem Kunststoffrohr;
- Figur 2: in der Perspektive ein Bestandteil einer Erwärmungseinheit bildendes Gehäuse der Anordnung der Figur 1;
- Figur 3: ebenfalls in der Perspektive eine Erwärmungseinheit der Anordnung der Figur 1;
- Figur 4: in der Ansicht eine Tragrolleneinheit;
- Figur 5: in der Seitenansicht einen Aufweitdorn;
- Figur 6: in der Perspektive, teilweise im Schnitt, den Aufweitdorn der Figur 5 und
- Figur 7: eine Stirnansicht auf den Aufweitdom, in Richtung des Pfeils VII der Figur 5 gesehen.

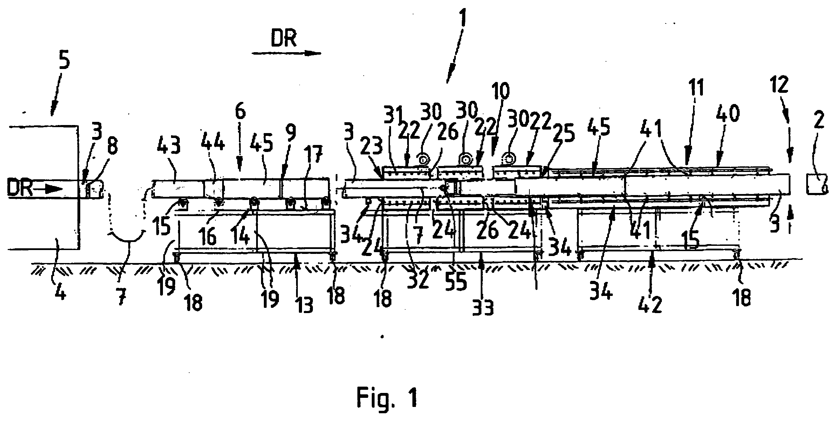

In der Figur 1 ist mit 1 eine Anordnung zur Herstellung von im Durchmesser erweiterten Rohrstücken 2 aus einem Kunststoffrohr 3 bezeichnet.

Die Anordnung 1 umfasst in Reihe eine hinter dem Rohrabzug 4 eines das Kunststoffrohr 3 erzeugenden, nicht näher dargestellten Extruders 5 angeordnete Bereitstellungseinheit 6 für einen über ein flexibles, nicht längenveränderbares Verbindungsmittel 7, insbesondere ein Drahtseil, mit einem Widerlager 8 (Corona) am Rohrabzug 4 koppelbaren Aufweitdorn 9, eine Erwärmungseinheit 10 und eine Kühleinheit 11 für das Kunststoffrohr 3 sowie eine nur schematisch veranschaulichte Trennvorrichtung 12 zum Abteilen von Rohrstücken 2 in gewünschter Länge vom Kunststoffrohr 3.

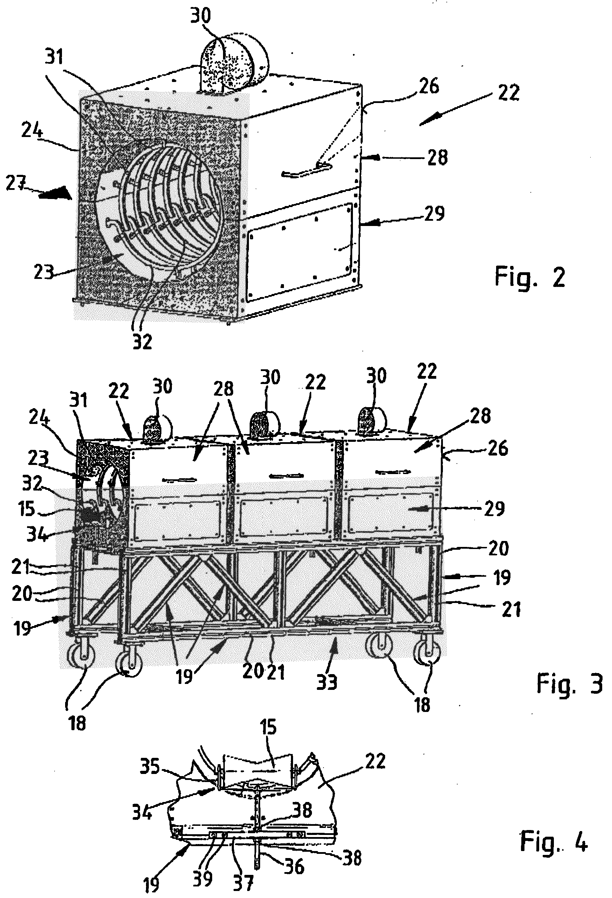

Die Bereitstellungseinheit 6 weist ein ortsveränderbares tischartiges Gestell 13 mit einer oberseitigen Rollenbahn 14 mit insgesamt fünf diaboloförmig gestalteten Tragrollen 15 für den Aufweitdorn 9 auf. Eine Tragrolle 15 ist zum Beispiel aus der Figur 4 in der Ansicht erkennbar. Die Tragrollen 15 der Rollenbahn 14 sind über Rollenböcke 16 auf der Oberseite 17 des Gestells 13 festgelegt. Das Gestell 13 ist mit unterseitigen Stützrollen 18 versehen und aus fachwerkartig zusammengesetzten Profilstäben gebildet, die an ihren Längsseiten 21 hinterschnittene Nuten 20 aufweisen (siehe hierzu auch die Figur 3). Die Stützrollen 18 können gegebenenfalls um vertikale Achsen über 360° drehbar und bei Bedarf auch lagefixierbar sein.

Die der Bereitstellungseinheit 6 nachfolgende Erwärmungseinheit 10 (siehe auch die Figuren 2 und 3) umfasst drei mit Abstand hintereinander angeordnete Gehäuse 22 mit jeweils einer Eintrittsöffnung 23 in einer Stirnseite 24 und einer dazu koaxialen Austrittsöffnung 25 in der gegenüber liegenden Stirnseite 26 für das Kunststoffrohr 3.

Jedes Gehäuse 22 ist im mittleren Höhenbereich in einer horizontalen Ebene 27 geteilt. Hierdurch ergibt sich ein oberes Gehäuseteil 28 und ein unteres Gehäuseteil 29, die bei Bedarf voneinander getrennt und für sich gehandhabt werden können.

in jedem Gehäuseteil 28, 29 sind mehrere mit axialem Abstand zueinander verlegte Infrarotstrahler 31, 32 vorgesehen, die sich jeweils annähernd über einen Halbkreis erstrecken. Hierbei ist aus den Figuren 2 und 3 zu erkennen, dass die infrarotstrahler 31 im oberen Gehäuseteil 28 zu den Infrarotstrahlern 32 im unteren Gehäuseteil 29 auf Lücke versetzt angeordnet sind.

Die infrarotstrahler 31, 32 sind radial nach außen mit einer Strahlungswärme abweisenden Beschichtung, insbesondere aus Gold, versehen. Damit wird die Strahlungswärme gezielt radial nach innen auf das zu erwärmende Kunststoffrohr 3 gerichtet. Gebläse 30 auf den oberen Gehäuseteilen 28 dienen dann zur Kühlung der Gehäuseteile 28, 29, insbesondere aber, um eine Beschädigung, beispielsweise ein Abplatzen, der Beschichtung an den Infrarotstrahlern 31, 32 zu verhindern.

Hinsichtlich der Erwärmung des Kunststoffrohrs 3 ist von Temperaturen zwischen 110°C und 120°C auszugehen, wobei die genaue Temperatur letztendlich vom Rohrmaterial abhängig ist.

Die drei Gehäuse 22 sind auf einem ortsveränderbaren tischartigen Gestell 33 angeordnet, das wie das Gestell 13 der Bereitstellungseinheit ausgebildet ist. Eine nochmalige Erläuterung ist daher entbehrlich.

Vor dem in Durchlaufrichtung DR des Kunststoffrohrs 3 ersten Gehäuse 22 und hinter dem in Durchlaufrichtung DR letzten Gehäuse 22, gegebenenfalls auch zwischen dem ersten und zweiten sowie dem zweiten und dritten Gehäuse 22 ist jeweils ein einstellbares Rollenlager 34 mit diaboloförmig gestalteten Tragrollen 15 vorgesehen.

Ein solches Rollenlager 34 geht genauer aus der Figur 4 hervor. Hierbei ist jede Tragrolle 15 in einer U-förmigen Halterung 35 drehbar gelagert. Die Halterung 35 ist mit einer vertikalen Spindel 36 versehen, die an einer Traverse 37 mittels Muttern 38 höhenverstellbar angeordnet ist. Die Traverse 37 selber ist, wie aus den Figuren 3 und 4 zu sehen ist, an einem stirnseitigen Profilstab 19 des Gestells 33 In Querrichtung verlagerbar und mittels Schraubmittel 39 lagefixierbar.

Über die Tragrollen 15 kann mithin das die Erwärmungseinheit 10 durchlaufende Kunststoffrohr 3 exakt auf den radialen Abstand zu den Infrarotstrahlern 31, 32 eingestellt werden.

Die der Erwärmungseinheit 10 in Durchlaufrichtung DR des Kunststoffrohrs 3 folgende Kühleinheit 11 (Figur 1) umfasst eine rohrförmige Kühlstrecke 40 mit radial nach innen gerichteten Sprühdüsen 41 für insbesondere Wasser. Die Sprühdüsen 41 sind gleichmäßig in Längsrichtung und über den inneren Umfang der Kühlstrecke 40 verteilt. Außerdem ist zu sehen, dass auch im Verlauf der Kühlstrecke 40 mehrere Rollenlager 34 mit diaboloförmig gestalteten Tragrollen 15 für das Kunststoffrohr 3 vorgesehen sind. Bei diesen Tragrollen 15 kann es sich um solche gemäß Figur 4 handeln.

Die Kühleinheit 11 ist wie die Erwärmungseinheit 10 und die Bereitstellungseinheit 6 auf einem ortsveränderbaren tischartigen Gestell 42 angeordnet. Dies ist wie die Gestelle 13 und 33 aufgebaut und bedarf folglich keiner nochmaligen Erläuterung.

Aufgrund der Stützrollen 18 können die Bereitstellungseinheit, die Erwärmungseinheit 10 und die Kühleinheit 11 dem Extruder 5 nachfolgend zur Herstellung von im Durchmesser erweiterten Rohrstücken 2 in die Fertigungslinie für das Kunststoffrohr 3 eingefahren oder auch wieder quer aus dieser verlagert werden.

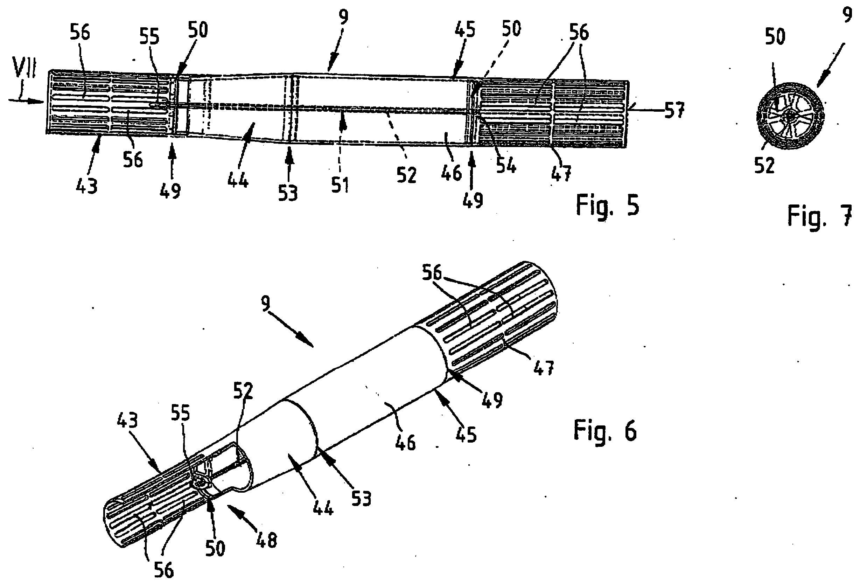

Der Aufbau des Aufweitdorns 9 geht aus den Figuren 5 bis 7 näher hervor. Der Aufweitdorn 9 ist insgesamt rohrförmig gestaltet und weist einen Im Außendurchmesser auf den Innendurchmesser des aus dem Extruder 5 tretenden Kunststoffrohrs 3 abgestimmten zylindrischen Zentrierabschnitt 43, einen sich daran anschließenden konischen Aufweitabschnitt 44 sowie einen auf den Aufweitabschnitt 44 folgenden zylindrischen Tragabschnitt 45 auf, der hinsichtlich des Außendurchmessers auf den Innendurchmesser der abzuteilenden Rohrstücke 2 abgestellt ist.

Das der Stirnseite 57 des Aufweitdorns 9 benachbarte, sich bereits in der Abkühlzone befindende Ende des Tragabschnitts 45 kann im Durchmesser geringfügig verringert sein, um ein Einklemmen des Kunststoffstrangs zu vermeiden.

Der Tragabschnitt 45 besteht aus zwei lösbar aneinandergefügten Längenbereichen 46, 47. In die Übergangsbereiche 48, 49 einerseits von dem Zentrierabschnitt 43 auf den Aufweitabschnitt 44 und andererseits zwischen den beiden Längenbereichen 46, 47 des Tragabschnitts 45 sind aus der Figur 7 erkennbare speichenförmige Einsätze 50 eingegliedert. Über diese Einsätze 50 und ein den Aufweitabschnitt 44 und den angrenzenden Längenbereich 46 des Tragabschnitts 45 durchsetzendes Koppelelement 51 in Form einer gegebenenfalls längenveränderbaren Spindel können alle Einzelteile 43, 44 und 45 mit 46 und 47 des Aufweitdorns 9 axial exakt zusammengefügt werden, wobei entsprechend ausgebildete Zentrierungen in den jeweiligen Übergangsbereichen 48, 49, 53 zwischen dem Zentrierabschnitt 43 und dem Aufweitabschnitt 44 sowie zwischen den beiden Längenbereichen 46, 47 des Tragabschnitts 45 vorgesehen sind.

Im Übergangsbereich 49 zwischen den beiden Längenbereichen 46, 47 des Tragabschnitts 45 kann an dem Koppelelement 51 eine Feststellmutter 54 und im Übergangsbereich 48 von dem Zentrierabschnitt 43 auf den Aufweitabschnitt 44 kann eine Ringmutter 55 vorgesehen sein. Die Ringmutter 55 dient dann zum Anschlag des Verbindungsmittels 7.

Aus den Figuren 5 und 8 ist schließlich noch erkennbar, dass sowohl der Zentrierabschnitt 43 als auch der diesem abgewandte endseitige Längenbereich 47 des Tragabschnitts 45 mit Ober den Umfang verteilten Längsausnehmungen 56 versehen sind. Diese verteilen sich jeweils auf zwei axial aufeinanderfolgende Gruppen.

Bei dem Verfahren zur Herstellung von im Durchmesser erweiterten Rohrstücken 2 aus einem Kunststoffrohr 3 wird zunächst hinter dem Rohrabzug 4 des Extruders 5 das Kunststoffrohr 3 abgelängt. Das am Rohrabzug 4 in dem Kunststoffrohr 3 vorhandene Widerlager 8 (Corona) wird dann Ober das flexible Verbindungsmittel 7 mit der Ringmutter 55 in dem auf der Bereitstellungseinheit 6 platzierten Aufweitdorn 9 verbunden.

Nunmehr wird die Extrusion des Kunststoffrohrs 3 fortgesetzt und dessen freie Stirnseite gelangt in Kontakt mit dem Aufweitdorn 9 (Eintritt des Zentrierabschnitts 43 in das Kunststoffrohr 3), wodurch dieser in die Gehäuse 22 der Erwärmungseinheit 10 verlagert wird. Die Endlage des Aufweitdorns 9 ist erreicht, wenn das Verbindungsmittel 7 straff gespannt ist. Bei weiterer Extrusion gelangt das Kunststoffrohr 3 in den Einflussbereich der infrarotstrahler 31, 32 der Erwärmungseinheit 10, wird hier auf die vorgesehene Temperatur gebracht und über den Aufweitabschnitt 44 im Innen- und Außendurchmesser vergrößert, so dass es dann auf den Tragabschnitt 45 des Aufweitdorns 9 gelangt Der Tragabschnitt 45 erstreckt sich, wie die Figur 1 erkennen lässt, bis in die Kühleinheit 11 hinein.

Bei weiterer Verlagerung des Kunststoffrohrs 3 wird diesem in der Kühleinheit 11 mittels der Sprühdüsen 41 Hitze entzogen und zwar so weit, dass sein Innen- und Außendurchmesser mit einem kontrollierten Nachschrumpfen erhalten bleibt

Nach dem Austritt aus der Kühleinheit 11 werden die Rohrstücke 2 mit einer nur schematisch dargestellten Trennvorrichtung 12 in Form beispielsweise einer fliegenden Rohrsäge mit der gewünschten Länge vom Kunststoffrohr 3 abgetrennt und dann der weiteren Verwendung zugeführt.

### Bezugszeichen:

- 1 -: Anordnung
- 2 -: Rohrstücke
- 3 -: Kunststoffrohr
- 4 -: Rohrabzug v. 5
- 5 -: Extruder
- 6 -: Bereitstellungseinheit
- 7 -: Verbindungsmittel
- 8 -: Widerlager in 4
- 9 -: Aufweitdorn
- 10 -: Erwärmungseinheit
- 11 -: Kühleinheit
- 12 -: Trennvorrichtung
- 13 -: Gestell v. 6
- 14 -: Rollenbahn auf 13
- 15 -: Tragrollen
- 16 -: Rollenböcke v. 14
- 17 -: Oberseite v. 13
- 18 -: Stützrollen v. 13,33,42
- 19 -: Profilstäbe
- 20 -: Nuten in 21
- 21 -: Längsseiten v. 19
- 22 -: Gehäuse
- 23 -: Eintrittsöffnung v. 22
- 24 -: Stirnseite v. 22
- 25 -: Austrittsöffnung v. 22
- 26 -: Stirnseite v. 22
- 27 -: Teilungsebene v. 22
- 28 -: oberes Gehäuseteil
- 29 -: unteres Gehäuseteil
- 30 -: Gebläse
- 31 -: Infrarotstrahler
- 32 -: infrarotstrahler
- 33 -: Gestell v. 10
- 34 -: Rollenlager
- 35 -: Halterung v. 34
- 36 -: Spindel v. 34
- 37 -: Traverse v. 34
- 38 -: Muttern
- 39 -: Schraubmittel
- 40 -: Kühlstrecke v.11
- 41 -: Sprühdüse
- 42 -: Gestell v. 11
- 43 -: Zentrierabschnitt v. 9
- 44 -: Aufweitabschnitt v. 9
- 45 -: Tragabschnitt v. 9
- 46 -: Längenbereich v. 45
- 47 -: Längenbereich v. 45
- 48 -: Übergangsbereich v. 43 auf 44
- 49 -: Übergangsbereich v. 46 auf 47
- 50 -: Einsätze v. 48, 49
- 51 -: Koppelelement
- 52 -: Spindel in 9
- 53 -: Übergangsbereich zw. 44 u. 46
- 54 -: Feststellmutter
- 55 -: Ringmutter
- 56 -: Längsausnehmungen in 43 u. 47
- 57 -: Stirnseite v. 9

- DR -: Durchlaufrichtung

## Patentansprüche

1. Verfahren zur Herstellung von im Durchmesser erweiterten Rohrstücken (2) aus einem Kunststoffrohr (3), **dadurch gekennzeichnet, dass** nach dem Ablängen eines aus einem Extruder (5) tretenden Kunststoffrohrs (3) hinter dem Rohrabzug (4) ein endseitig des Extruders (5) im Kunststoffrohr (3) vorgesehenes Widerlager (8) mit einem zum Kunststoffrohr (3) axial ausgerichteten Aufweitdorn (9) abstandsveränderbar gekoppelt und anschließend das Kunststoffrohr (3) mit Extrusionsgeschwindigkeit zunächst bis zum Kontakt mit dem Aufweitdorn (9) und dann gemeinsam mit dem Aufweitdorn (9) in eine Erwärmungseinheit (10) für das Kunststoffrohr (3) bis zur Endlage des Aufweitdorn (9) überführt wird, und dass danach das erwärmte "Kunststoffrohr (3) über den Aufweitdorn (9) geschoben, hierbei im Innen-und Außendurchmesser erweitert, anschließend in einer der Erwärmungseinheit (10) nachgeordneten Kühleinheit (11) seiner Hitze entzogen und letztlich auf die gewünschten Rohrstücklängen abgeteilt wird.

2. Anordnung zur Durchführung des Verfahrens nach Anspruch 1, **dadurch ekennzeichnet,** dass hinter den Rohrabzug (4) des Extruders (5) in Reihe eine Bereitstellungseinheit (6) für den über ein flexibles Verbindungsmittel (7) mit dem Widerlager (8) am Rohrabzug (4) koppelbaren Aufweitdorn (9), eine Erwärmungseinheit (10) und eine Kühlelnheit (11) für das Kunststoffrohr (3) sowie eine Trennvorrichtung (12) zum Abteilen von Rohrstücken (2) vom Kunststoffrohr (3) eingegliedert sind.

3. Anordnung nach Anspruch 2, **dadurch gekennzeichnet, dass** die Bereitstellungseinheit (6) ein ortsveränderbares tischartiges Gestell (13) mit einer oberseitigen Rollenbahn (14) mit diaboloförmig gestalteten Tragrollen (15) für den Aufweitdorn (9) umfasst.

4. Anordnung nach Anspruch 2 oder 3, **dadurch gekennzeichnet, dass** die Erwärmungseinheit (10) in mindestens einem mit einer Eintrittsöffnung (23) und einer dazu koaxialen Austrittsöffnung (25) für das Kunststoffrohr (3) versehenen Gehäuse (22) mit axialem Abstand zueinander kreisringförmig verlegte infrarotstrahler (31, 32) aufweist.

5. Anordnung nach Anspruch 4, **dadurch gekennzeichnet, dass** das Gehäuse (22) Im mittleren Höhenbereich in einer horizontalen Ebene (27) geteilt ist und in jedem Gehäuseteil (28, 29) sich über einen Halbkreis erstreckende Infrarotstrahler (31, 32) vorgesehen sind, wobei die Infrarotstrahler (31) im oberen Gehäuseteil (28) zu den Infrarotstrahlern (32) im unteren Gehäuseteil (29) auf Lücke versetzt angeordnet sind.

6. Anordnung nach Anspruch 5, **dadurch gekennzeichnet, dass** dem oberen Gehäuseteil (28) ein Gebläse (30) zugeordnet ist

7. Anordnung nach einem der Ansprüche 4 bis 6, **dadurch gekennzeichnet, dass** sowohl an der Eintrittsöffnung (23) als auch an der Austrittsöffnung (25) des Gehäuses (22) je ein einstellbares Rollenlager (34) mit diaboloförmig gestalteten Tragrollen (15) angeordnet ist.

8. Anordnung nach einem der Ansprüche 4 bis 7, **dadurch gekennzeichnet, dass** das Gehäuse (22) auf einem ortsveränderbaren tischartigen Gestell (33) angeordnet ist.

9. Anordnung nach einem der Ansprüche 4 bis 8, **dadurch gekennzeichnet, dass** mindestens zwei Gehäuse (22) in Reihe vorgesehen sind.

10. Anordnung nach einem der Ansprüche 2 bis 9, **dadurch gekennzeichnet, dass** die Kühleinheit (11) eine rohrförmige Kühlstrecke (40) mit radial nach innen gerichteten Sprühdüsen (41) aufweist.

11. Anordnung nach Anspruch 10, **dadurch gekennzeichnet, dass** im Verlauf der Kühlstrecke (40) mehrere Rollenlager (34) mit diaboloförmig gestalteten Tragrollen (15) für das Kunststoffrohr (3) vorgesehen sind.

12. Anordnung nach einem der Ansprüche 2 bis 11, **dadurch gekennzeichnet, dass** die Kühleinheit (11) auf einem ortsveränderbaren tischartigen Gestell (42) angeordnet ist.

13. Anordnung nach einem der Ansprüche 3, 8 oder 12, **dadurch gekennzeichnet, dass** die Gestelle (13, 33, 42) mit Stützrollen (18) versehen sind.

14. Anordnung nach einem der Ansprüche 3, 8, 12 oder 13, **dadurch gekennzeichnet, dass** die Gestelle (13, 33, 42) aus fachwerkartig zusammen gesetzten Profilstäben (19) gebildet sind.

15. Anordnung nach einem der Ansprüche 2 bis 14, **dadurch gekennzeichnet, dass** der rohrförmig ausgebildete Aufweitdorn (9) einen im Außendurchmesser auf den Innendurchmesser des aus dem Extruder (5) tretenden Kunststoffrohrs (3) abgestimmten zylindrischen Zentrierabschnitt (43), einen sich daran anschließenden konischen Aufweitabschnitt (44) sowie einen auf den Aufweitabschnitt (44) folgenden zylindrischen Tragabschnitt (45) aufweist, der hinsichtlich des Außendurchmessers auf den Innendurchmesser der abzuteilenden Rohrstücke (2) abgestellt ist.

## Claims

1. A method for the manufacture of pipe elements (2) with an extended diameter from a plastic pipe (3), **characterized in that**, after cutting into length a plastic pipe (3) emanating from an extruder (5), behind the pipe discharge (4) an abutment (8) provided at the end side of the extruder (5) in the plastic pipe (3) is connected to a widening mandrel (9) axially aligned with the plastic pipe (3) in a distance-variable manner and subsequently the plastic pipe (3) is transferred with the extrusion speed first up to the contact with the widening mandrel (9) and then commonly with the widening mandrel (9) into a heating unit (10) for the plastic pipe (3) until the end position of the widening mandrel (9), and that thereafter the heated plastic pipe (3) is pushed over the widening mandrel (9), is expanded hereby in the inner and outer diameter, is subsequently cooled in a cooling unit (11) following the heating unit (10) and is finally separated into the desired pipe element lengths.

2. An assembly for carrying out the method according to claim 1, **characterized in that**, behind the pipe discharge (4) of the extruder (5), a disposition unit (6) for the widening mandrel (9) connectable to the abutment (8) at the pipe discharge (4) by means of flexible connecting means (7), a heating unit (10) and a cooling unit (11) for the plastic pipe (3) as well as a separating device (12) for separating pipe elements (2) from the plastic pipe (3) are incorporated in series.

3. The assembly according to claim 2, **characterized in that** the disposition unit (6) includes a desk-like frame (13) variable in its position and having an upper roller track (14) with diabolo-like designed bearing rollers (15) for the widening mandrel (9).

4. The assembly according to claim 2 or 3, **characterized in that** the heating unit (10) has circularly and with axial distance positioned infrared radiators (31, 32) in at least one housing (22) provided with an inlet opening (23) and an outlet opening (25) for the plastic pipe (3) coaxial with respect thereto.

5. The assembly according to claim 4, **characterized in that** the housing (22) is separated in a horizontal plane (27) in the mean height range and **in that** infrared radiators (31, 32) extending over a half circle are provided in each housing part (28, 29) wherein the infrared radiators (31) in the upper housing part (28) are offset with a distance relative to the infrared radiators (32) in the lower housing part (29).

6. The assembly according to claim 5, **characterized in that** a blower (30) is associated with the upper housing part (28).

7. The assembly according to one of the claims 4 to 6, **characterized in that** a respective adjustable roller bearing (34) with diabolo-like designed bearing rollers (15) is disposed at the inlet opening (23) and at the outlet opening (25) of the housing (22).

8. The assembly according to one of the claims 4 to 7, **characterized in that** the housing (22) is disposed on a desk-like frame (33) which position can be varied.

9. The assembly according to one of the claims 4 to 8, **characterized in that** at least two housings (22) are provided in series.

10. The assembly according to one of the claims 2 to 9, **characterized in that** the cooling unit (11) includes a pipe-like cooling track (40) with radial inwardly directed spray nozzles (41).

11. The assembly according to claim 10, **characterized in that** in the course of the cooling track (40) a plurality of roller bearings (24) with diabolo-like designed bearing rollers (15) for the plastic pipe (3) is provided.

12. The assembly according to one of the claims 2 to 11, **characterized in that** the cooling unit (11) is disposed on a desk-like frame (42) which position can be varied.

13. The assembly according to one the claims 3, 8 or 12, **characterized in that** the frames (13, 33, 42) are provided with support rollers (18).

14. The assembly according to one of the claims 3, 8, 12 or 13, **characterized in that** the frames (13, 33, 42) are formed by profile rods (19) which are composed in a framework-like manner.

15. The assembly according to one of the claims 2 to 14, **characterized in that** the widening mandrel (9) formed like a pipe has a cylindrical centring portion (43) adjusted in its outer diameter to the inner diameter of the plastic pipe (3) leaving the extruder (5), a joining conical expanding portion (44) as well as a cylindrical bearing portion (45) following to the expanding portion (44), the outer diameter of the bearing portion being adjusted to the inner diameter of the pipe elements (2) to be separated.

## Revendications

1. Procédé de fabrication de pièces tubulaires (2) au diamètre évasé à partir d'un tuyau de matière plastique (3), **caractérisé en ce que**, après tronçonnage d'un tuyau en matière plastique (3) sortant d'une extrudeuse (5), derrière l'extracteur de tuyau (4), une butée (8) ménagée côté extrémité de l'extrudeuse (5) dans le tuyau de matière plastique (3) est couplée à un mandrin d'évasement (9) orienté axialement par rapport au tuyau de matière plastique (3) de manière à pouvoir en modifier la distance et, ensuite, le tuyau de matière plastique (3) est transféré à la vitesse d'extrusion tout d'abord jusqu'à venir en contact avec le mandrin d'évasement (9) et, ensuite, conjointement avec le mandrin d'évasement (9), dans une unité de chauffage (10) pour le tuyau de matière plastique (3) jusqu'à la position finale du mandrin d'évasement (9), et, ensuite, le tuyau de matière plastique chauffé (3) est déplacé sur le mandrin d'évasement (9), y est évasé en diamètre interne et en diamètre externe, puis la chaleur qui lui est appliquée est éliminée dans une unité de refroidissement (11) subordonnée à l'unité de chauffage (10) et, enfin, il est scindé en pièces tubulaires souhaitées.

2. Aménagement pour réaliser le procédé selon la revendication 1, **caractérisé en ce que**, derrière l'extracteur de tuyau (4) de l'extrudeuse (5), on intègre en série une unité d'affectation (6) pour le mandrin d'évasement (9) qui peut être couplé à la butée (8) sur l'extracteur de tuyau (4) via un moyen de liaison flexible (7), une unité de chauffage (10) et une unité de refroidissement (11) pour le tuyau de matière plastique (3) ainsi qu'un dispositif de séparation (12) pour scinder le tuyau de matière plastique (3) en pièces tubulaires (2).

3. Aménagement selon la revendication 2, **caractérisé en ce que** l'unité d'affectation (6) comprend un cadre de type table (13) localement modifiable avec un transporteur à galets supérieur (14) ayant des galets porteurs conformés en diabolo (15) pour le mandrin d'évasement (9).

4. Aménagement selon la revendication 2 ou la revendication 3, **caractérisé en ce que** l'unité de chauffage (10) présente dans au moins un boîtier (22) pourvu d'une ouverture d'entrée (23) et d'une ouverture de sortie (25) qui lui est coaxiale pour le tuyau en matière plastique (3) des émetteurs de rayons infrarouges (31, 32) disposés en cercle à distance axiale l'un de l'autre.

5. Aménagement selon la revendication 4, **caractérisé en ce que** le boîtier (22) est divisé dans la zone de hauteur centrale par un plan horizontal (27) et des émetteurs de rayons infrarouges (31, 32) s'étendant sur un demi-cercle sont prévus dans chaque partie de boîtier (28, 29), dans lequel les émetteurs de rayons infrarouges (31) de la partie de boîtier supérieure (28) sont aménagés décalés par des espacements vis-à-vis des émetteurs de rayons infrarouges (32) de la partie de boîtier inférieure (29).

6. Aménagement selon la revendication 5, **caractérisé en ce qu'**une soufflerie (30) est affectée à la partie de boîtier supérieure (28).

7. Aménagement selon l'une quelconque des revendications 4 à 6, **caractérisé en ce que**, autant sur l'ouverture d'entrée (23) que sur l'ouverture de sortie (25) du boîtier (22), se trouve respectivement un palier à galets réglable (34) avec des galets porteurs (15) en forme de diabolo.

8. Aménagement selon l'une quelconque des revendications 4 à 7, **caractérisé en ce que** le boîtier (22) est aménagé sur un cadre de type table modifiable localement (33).

9. Aménagement selon l'une quelconque des revendications 4 à 8, **caractérisé en ce qu'**il est prévu au moins deux boîtiers (22) en série.

10. Aménagement selon l'une quelconque des revendications 2 à 9, **caractérisé en ce que** l'unité de refroidissement (11) présente une galerie de refroidissement tubulaire (40) avec des buses de pulvérisation (41) tournées radialement vers l'intérieur.

11. Aménagement selon la revendication 10, **caractérisé en ce qu'**il est prévu, dans le trajet de la galerie de refroidissement (40), plusieurs paliers à galets (34) avec des galets porteurs en forme de diabolo (15) pour le tuyau de matière plastique (3).

12. Aménagement selon l'une quelconque des revendications 2 à 11, **caractérisé en ce que** l'unité de refroidissement (11) est aménagée sur un cadre de type table modifiable localement (42).

13. Aménagement selon l'une quelconque des revendications 3, 8 ou 12, **caractérisé en ce que** les cadres (13, 33, 42) sont pourvus de galets d'appui (18).

14. Aménagement selon l'une quelconque des revendications 3, 8, 12 ou 13, **caractérisé en ce que** les cadres (13, 33, 42) sont formés de tiges profilées (19) assemblées conjointement en treillis.

15. Aménagement selon l'une quelconque des revendications 2 à 14, **caractérisé en ce que** le mandrin d'évasement conçu en forme de tuyau (9) présente une section centrale cylindrique (43) dont le diamètre externe est accordé au diamètre interne du tuyau de matière plastique (3) sortant de l'extrudeuse (5), une section d'évasement conique (44) qui lui est raccordée ainsi qu'une section de support cylindrique (45) qui suit la section d'évasement (44), ladite section de support étant adaptée, en matière de diamètre externe, au diamètre interne des pièces tubulaires (2) à scinder.
